Europäisches Patentamt

**European Patent Office**

**Office européen des brevets** ·

(19)

(11) Publication number: **0 057 969**
**A1**

(12)

# EUROPEAN PATENT APPLICATION

(21) Application number: **82300061.7**

(22) Date of filing: **07.01.82**

(51) Int. Cl.³: **F 16 K 31/08**

(30) Priority: **14.01.81 US 225081**

(43) Date of publication of application:
**18.08.82 Bulletin 82/33**

(84) Designated Contracting States:
**DE FR GB IT NL SE**

(71) Applicant: **Sundstrand Corporation**
**4751 Harrison Avenue**
**Rockford Illinois(US)**

(72) Inventor: **Sjolund, John Robert**
**1437 Arden View Drive**
**Arden Hills Minnesota 55112(US)**

(74) Representative: **SERJEANTS**
**25, The Crescent**
**Leicester, LE1 6RX(GB)**

(54) **Pilot valves.**

(57) A pilot valve for a servovalve includes a pair of nozzles (42, 43) supplied with supply fluid under pressure, and a flapper/armature (13, 25) movable relative to the nozzles to vary the differential pressure at outlets (44, 45) of the valve. A magnetic assembly (10, 30) operates in response to an input current to effect movement of the flapper and includes spring means (24, 27, 28) for applying a centering force to the flapper/armature to overcome a decentering force of the assembly on the flapper/armature when the input current is zero, the spring means being such that the centering force is just sufficient to overcome the decentering force of the assembly so that the flapper will move to maintain output pressure proportional to input current irrespective of changes in pressure of the supply fluid.

FIG.4

EP 0 057 969 A1

## PILOT VALVES

The present invention relates to pilot vavlves used in pilot pressure control applications such as in the pilot stages of pressure controlled servovalves.

Servovalves are typically two-stage devices which respond to an input electrical signal for providing a differential pressure output utilized by a hydraulic motor for preforming work. For example, such a servovalve is comprised of a pilot stage and a boost stage.· The pilot stage is typically a valve having a magnetic assembly which responds to an input electrical signal for positioning a flapper between a pair of nozzles. The position of the flapper between the nozzles controls the pressure within the nozzles in order to provide a controllable differential output pressure from the pilot stage.

The boost valve stage is an amplifying stage which has a spool the position of which is controlled by the differential output pressure from the pilot stage. The spool is used to control the output differential pressure from the boost valve stage. The boost valve stage differential output pressure is then used for positioning a hydraulic motor.

The magnetic assembly of the pilot stage section exerts on the flapper both a magnetic force and also a mechanical spring force resulting from centering springs used to center the flapper when the assembly is deenergized. Prior art pilot stages have a substantial spring force acting upon the flapper such that a significant percentage of the torque developed by the magnetic assembly of the pilot stage was used in counteracting the spring force leaving the remaining torque for positioning the flapper between the nozzles of the pilot stage. In such pilot valves, the differential pressure versus input current response is not truly proportional since it changes as the supply pressure changes.

It is an aim of the invention to provide an improved pilot valve.

According to the invention, there is provided a pilot valve comprising a nozzle means supplied in use with fluid under pressure, a flapper movable toward and away from the nozzle/means to vary the pressure of fluid at an outlet of the valve, a magnetic assembly operable in response to an input current to effect said movement of the flapper, and means applying a centering force to the flapper to overcome a decentering force of the magnetic assembly on the flapper when the input current is zero, characterized in that the force of the centering means is of a value just sufficient to overcome the decentering force of the magnetic assembly so that the flapper will move to maintain output pressure proportional to input current irrespective of changes in pressure of the supply fluid.

An embodiment of the invention will now be described by way of example only, with reference to the accompanying drawings, in which:-

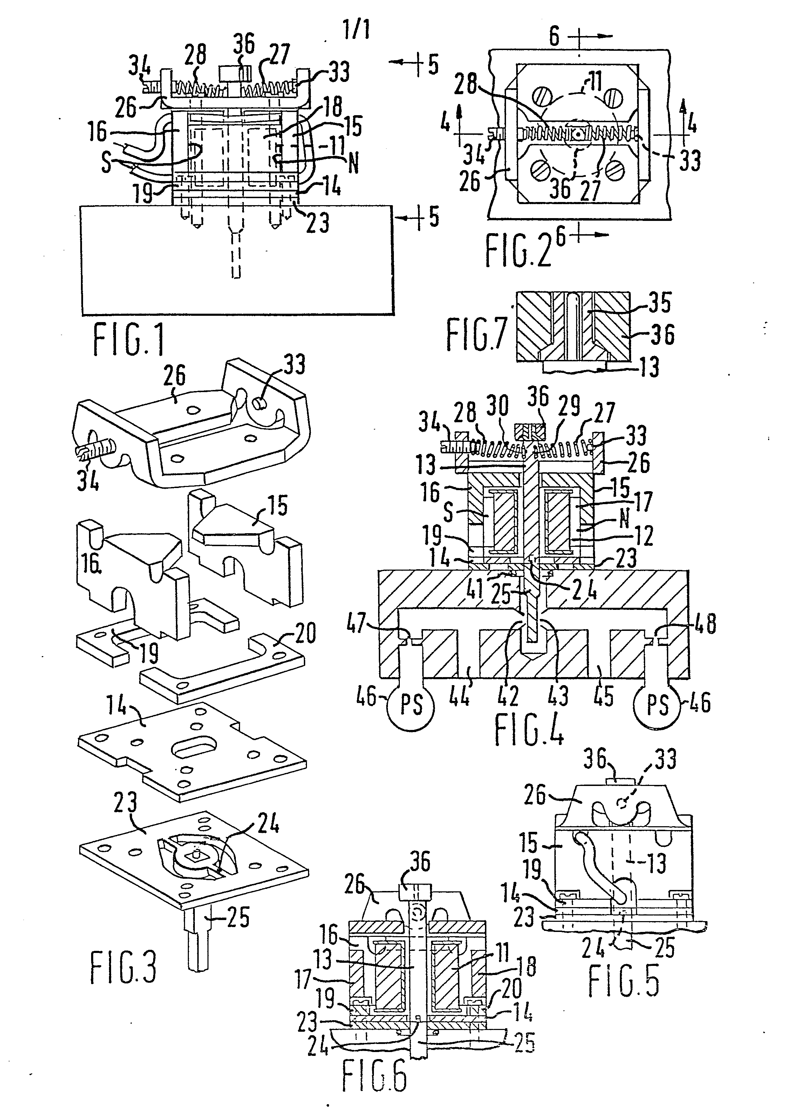

Figure 1 is a side view of a pilot valve according to the present invention,

Figure 2 is a top view of the valve of Figure 1,

Figure 3 is a partial exploded view of the pilot valve of Figure 1,

Figure 4 is a cross-section of the pilot valve of Figure 1,

Figure 5 is a front view of the magnetic assembly forming a part of the pilot valve of Figure 1,

Figure 6 is a cross-section of the assembly shown in Figure 5; and,

Figure 7 is a cross-section view of a damper of the assembly.

## DETAILED DESCRIPTION

The pilot valve shown in the drawings comprises a magnetic assembly including coil 11 wound around a bobbin 12 through which an armature 13 extends. Bobbin 12 is supported between a plate 14 and pole pieces 15 and 16. A permanent magnet 17 extends from pole piece 15 to pole piece 16 on one side of armature 13 and a permanent magnet 18 extends from pole piece 15 to pole piece 16 on the other side of armature 13. Pole pieces 15 and 16 are separated from plate 14 by spacers 19 and 20. A pivot plate 23 supports this magnet assembly and has a torsion bar 24 included therewith for providing a pivot axis for armature 13 and a flapper 25. Armature 13 and flapper 25 may be suitably attached to torsion bar 24 as by a unitary construction or by brazing or the like. Armature 13 and flapper 25 together form the flapper of the pilot valve.

To complete the magnetic assembly portion of the pilot valve, a spring holder plate 26 is suitably attached to pole pieces 15 and 16 and supports null adjustment springs 27 and 28 which are positioned between the end flanges of plate 26 and armature 13. Armature 13 has suitable recesses 29 and 30 therein for receiving the ends of springs 27 and 28. One end of spring holding plate 26 has a short stub 33 for receiving the other end of spring 27 and an adjustment screw 34 receives the other end of spring 28. Armature 13 has a roll pin 35 extending through its top for cooperation with damper mechanism 36. Damper mechanism 36 is designed to move with armature 13 but to damp out any noise which might be caused by vibration of armature 13.

The magnetic assembly is sealed by O-ring seal 41 from the nozzle arrangement. Flapper 25 extends down between nozzles 42 and 43 for controlling the pressures therein. Output port 44 supplies the pressure within nozzle 42 as an output pressure and output port 45 supplies the pressure within nozzle 43 as an output pressure. Pressure is supplied to nozzles 42 and 43 from pressure supply 46 through power orifices 47 and 48. Output ports 44 and 45 together provide the output differential pressure from the pilot valve.

In setting up the pilot valve for operation, the magnets of the pilot valve magnetic assembly are first charged to saturation and then demagnetized until the magnetic force is just less than the mechanical force produced by springs 27 and 28 and torsion bar 24 so that there is a slight mechanical spring rate on the armature 13 to keep it centered when source 46 is not connected to the valve. (If there is zero resultant spring rate on armature 13, then armature 13 floats and may, for example, be in an extreme position because of external forces and/or because the flapper was in the extreme position when the pilot valve had been previously deenergized. In such an extreme position, with no current input into the magnetic assembly, the application of supply pressure at source 46 will result in a sudden large differential output pressure at output ports 44 and 45 which will result in sudden hammering of the boost valve and load. This sudden large differential output pressure, however, will decay as the forces acting on the flapper 25 from nozzles 42 and 43 increases due to build up of source pressure. These forces will eventually center flapper 25 between the nozzles.) Momentary surges in the differential output pressure when supply pressure is first applied to the pilot valve can be eliminated by applying a slight resultant spring force to the flapper so that the flapper is in a central position producing no differential output pressure (with little or no supply pressure applied to the valve) until a current input is supplied to the magnetic assembly.

The equilibrium relationship of the various forces acting on the flapper/armature can be expressed by the following equation:

$$(k_1 + k_2) x + k_3 i + k_4 \Delta P = 0 \qquad (1)$$

where  $k_1$  is a magnetic insability constant of the permanent magnet structure

  $k_2$  is a spring constant of springs 27,28 and of opposite sign to $k_1$

  $k_3$  is a current response constant

  $k_4$  is an output pressure response constant

i   is the input current

ΔP  is the differential output pressure

and   x   is the angular movement from a central
          position of the flapper/armature

Also  ΔP = Ps (supply pressure).x          (2), and
substituting for x in equation (1) gives

$$\Delta P \left( 1 + \frac{k_1 + k_2}{k_4 \cdot P_s} \right) = \frac{-k_3}{k_4} i \qquad (3)$$

From equation (3) it will be apparent that in setting
up the pilot valve in the manner described immediately above,
the value $k_1 + k_2$ will be close to zero, thereby ensuring
that input current (i) is directly proportional to differ-
ential output pressure ΔP irrespective of changes in supply
pressure Ps.

The  size  of nozzles 42 and 43 is also selected
so that the torque exerted on flapper 25 by the fluid exiting from nozzles 42 and 43 is capable of balancing the maximum torque exerted on armature 13 by the magnetic assembly,
this maximum torque being any desired maximum torque depending upon the desired performance of the pilot valve.  That
is, the size of nozzles 42 and 43 is chosen so that the
pressure across output ports 44 and 45 applies a feedback
torque to flapper 25 so that this torque balances the torque
on armature 13 as applied by the magnetic assembly.  Thus,
as the torque applied to armature 13 changes, the position
of flapper 25 will change to a  point where the torque
applied to it due to the force exerted on it by the fluid
exiting from nozzles 42 and 43 which is a function of the
differential pressure across output lines 44 and 45 balances
the torque applied to armature 13 by the magnetic assembly.
The size of nozzles 42 and 43 may be conveniently deter-
mined by using the expression

$$T_{max} = (A_N)(L_F)(\Delta P)$$

where $T_{max}$ is the maximum torque desired to be generated by the magnetic assembly due to the input currents, $A_N$ is the

area of the nozzles, $L_F$ is the length of the flapper from the nozzles to its pivot point, and $\Delta P$ is the differential output pressure across output ports 44 and 45.

Inherent in the design of the above described pilot valve is the ability of the valve to compensate for variations in load applied to output ports 44 and 45. If the load on either or both ports changes (for instance the flow rate) the flapper will move to maintain substantially the same output differential pressure.

- 7 -

## CLAIMS

1.  A pilot valve comprising a nozzle means supplied in use with fluid under pressure, a flapper movable toward and away from the nozzle means to vary the pressure of fluid at an outlet of the valve, a magnetic assembly operable in response to an input current to effect said movement of the flapper, and means applying a centering force to the flapper to overcome a decentering force of the magnetic assembly on the flapper when the input current is zero, characterized in that the force of the centering means (24,27,28) is of a value just sufficient to overcome the decentering force of the magnetic assembly so that the flapper will move to maintain output pressure proportional to input current irrespective of changes in pressure of the supply fluid.

2.  The pilot valve of Claim 1, characterized in that the flapper (25) is movable with an armature (13) located within a coil (11) to which said input current is applied, and in that said armature is positioned between the pole pieces (15) and (16) of a permanent magnet.

3.  The pilot valve of Claim 1 or 2, characterized in that the size of the nozzle means (42,43) is selected by employing the equation:-

    $T_{max} = (A_N)(L_F)(\Delta P)$, where $T_{max}$ is the maximum torque to be generated by the magnetic assembly due to the input current, $A_N$ is the area of the nozzle means, $L_F$ is the length of the flapper from a pivot point to the nozzle means, and $\Delta P$ is the output pressure.

4.  The pilot stage of any one of the preceding Claims, characterized in that the nozzle means includes two nozzles (42,43) located on opposite side of the flapper each supplied with supply fluid, movement of the flapper between the nozzles in response to said input current causing variation in the differential output pressure at two outlets in proportion to said input current.

0057969

1/1

FIG.1

FIG.2

FIG.3

FIG.4

FIG.5

FIG.6

FIG.7

# 0057969

## European Patent Office

## EUROPEAN SEARCH REPORT

Application number

EP 82300061.7

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | <u>US - A - 3 556 150</u> (D.A. KING)<br>* Column 2, line 24 - column 4, line 30; fig. 1-5 *<br>-- | 1,2,4 | F 16 K 31/08 |
| A | <u>GB - A - 1 389 514</u> (SOCIETE D'OPTIQUE, PRECISION, ELECTRONIQUE ET MECANIQUE)<br>* Page 1, line 82 - page 2, line 96; fig. 1-4 *<br>---- | 1,2,4 | |

**TECHNICAL FIELDS SEARCHED (Int.Cl. 3)**

F 16 K   3/00

F 16 K 17/00

F 16 K 31/00

G 05 D 16/00

F 15 B 13/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| X | The present search report has been drawn up for all claims | |
|---|---|---|
| Place of search<br>VIENNA | Date of completion of the search<br>21-04-1982 | Examiner<br>BOUSSARIAN |

EPO Form 1503.1   08.78